# EUROPÄISCHE PATENTANMELDUNG

(11) **EP 3 181 968 A1**
(43) Veröffentlichungstag der Anmeldung: **21.06.2017**
(21) Anmeldenummer: 15200191.3
(22) Anmeldetag: 15.12.2015
(51) Int. Cl.: F16K 31/08

(54) **ELEKTRISCH SCHALTBARES VENTIL FÜR FLUIDE MEDIEN**

(71) Anmelder: UNIVER S.p.A., 20128 Milano (IT)
(72) Erfinder: Zaro, Roberto, 20020 Vanzaghello (MI) (IT)
(74) Vertreter: Quermann, Helmut

(57) **Zusammenfassung**

Die Erfindung betrifft ein elektrisch schaltbares Ventil für fluide Medien aufweisend einen ersten Anschluss (2) sowie einen zweiten Anschluss (3), wobei die Anschlüsse (2, 3) mit einem Ventilraum (5) verbunden sind, einen im Ventilraum (5) verschiebbar gelagerten Verschlusskörper (6), wobei der Verschlusskörper (6) in einer ersten Schaltstellung den ersten Anschluss (2) dichtend verschließt und in einer zweiten Schaltstellung den ersten Anschluss (2) freigibt, einen in einer Führungsaufnahme (7) axial verschiebbar gelagerten, im Betrieb dem fluiden Medium ausgesetzten Magnetanker (8), wobei der Magnetanker (8) mit dem Verschlusskörper (6) zusammenwirkt, einen in der Führungsaufnahme (7) ortsfest angeordneten Permanentmagneten (10), wobei der Magnetanker (8) mit dem Permanentmagneten (10) derart zusammenwirkt, dass der Magnetanker (8) in einer der Schaltstellungen des Verschlusskörpers (6) vom Permanentmagneten (10) gehalten wird, eine Lageraufnahme (15), die die Führungsaufnahme (7) und eine den Magnetanker (8) und die Führungsaufnahme (7) radial umschließende Spule (9) aufnimmt, wobei die Lageraufnahme (15) auf einer dem Verschlusskörper (6) zugewandten Seite eine Durchgangsöffnung aufweist und der Magnetanker (8) die Durchgangsöffnung durchsetzt, sowie ein erstes Dichtteil (13), das innerhalb der Führungsaufnahme (7) zwischen dem Permanentmagneten (10) und dem Magnetanker (8) angeordnet ist.

Bei einem solchen Ventil ist erfindungsgemäß vorgesehen, dass ein zweites Dichtteil (16) zwischen der Lageraufnahme (15) und der Führungsaufnahme (7) angeordnet ist.

## Beschreibung

Die Erfindung betrifft ein elektrisch schaltbares Ventil für fluide Medien, insbesondere ein zwei Schaltstellungen aufweisendes elektrisch schaltbares Magnetventil. Ein solches Ventil ist einer Vielzahl von Ausführungsformen bekannt.

In der DE 10 2013 017 259 A1 ist ein elektrisch schaltbares 2-Wege-Ventil für fluide Medien offenbart, aufweisend einen ersten Anschluss sowie einen zweiten Anschluss, einen im Ventilraum verschiebbar gelagerten Verschlusskörper, wobei der Verschlusskörper in einer ersten Schaltstellung den ersten Anschluss dichtend verschließt und in einer zweiten Schaltstellung den ersten Anschluss freigibt, einen in einer Führungsaufnahme axial verschiebbar gelagerten, im Betrieb dem fluiden Medium ausgesetzten Magnetanker, wobei der Magnetanker mit dem Verschlusskörper zusammenwirkt, einen in der Führungsaufnahme ortsfest angeordneten Permanentmagneten, wobei der Magnetanker mit dem Permanentmagneten derart zusammenwirkt, dass der Magnetanker in einer der Schaltstellungen des Verschlusskörpers vom Permanentmagneten gehalten wird, eine Lageraufnahme, die die Führungsaufnahme und eine den Magnetanker und die Führungsaufnahme radial umschließende Spule aufnimmt, wobei die Lageraufnahme auf einer dem Verschlusskörper zugewandten Seite eine Durchgangsöffnung aufweist und der Magnetanker die Durchgangsöffnung durchsetzt, sowie ein erstes Dichtteil, das innerhalb der Führungsaufnahme zwischen dem Permanentmagneten und dem Magnetanker angeordnet ist. Die Schaltstellung des Ventils ist über die Spule einstellbar, wobei zu diesem Zweck die Spule mit einem Umschaltstrom, insbesondere einem Gleichstrom der entsprechenden Polarität und Stromstärke, versorgt wird, um in der Spule ein elektromagnetisches Feld zu erzeugen, das mit dem in der Führungsaufnahme verschiebbar gelagerten Magnetanker derart zusammenwirkt, dass dieser in der Führungsaufnahme axial verschoben wird und, aufgrund des Zusammenwirkens mit dem Verschlusskörper der Verschlusskörper, von der ersten Schaltstellung in die zweite Schaltstellung oder von der zweiten Schaltstellung in die erste Schaltstellung übergeht.

Bei Ventilen der vorgenannten Art kann das fluide Medium auf der dem Magnetanker abgewandten Seite des Permanentmagneten in die Führungsaufnahme gelangen und dadurch in Kontakt mit dem Permanentmagneten kommen, wodurch es zum einen zu einer Korrosion des Permanentmagneten, typischerweise eines Seltenerdmagneten, und/oder einer Beschichtung des Permanentmagneten durch das fluide Medium und zum anderen zu einer Kontamination des fluiden Mediums durch den Permanentmagneten und/oder die Beschichtung des Permanentmagneten kommen kann. Des Weiteren ist auch ein Kontakt zwischen dem fluiden Medium und der Spule möglich, sodass es auch zu einer Korrosion der Spule und zu einer Kontamination des fluiden Mediums durch die Spule kommen kann.

Aufgabe der vorliegenden Erfindung ist es daher, ein Ventil der vorgenannten Art derart weiterzubilden, dass ein Kontakt zwischen fluidem Medium und Permanentmagneten verhindert ist.

Gelöst wird die Aufgabe durch ein Ventil, das gemäß den Merkmalen des Patentanspruchs 1 ausgebildet ist.

Das erfindungsgemäße, elektrisch schaltbare Ventil für fluide Medien zeichnet sich gegenüber dem gattungsgemäßen Ventil dadurch aus, dass ein zweites Dichtteil zwischen der Lageraufnahme und der Führungsaufnahme angeordnet ist.

Das erste Dichtteil, das innerhalb der Führungsaufnahme zwischen dem Permanentmagneten und dem axial verschiebbar in der Führungsaufnahme gelagerten Magnetanker angeordnet ist, stellt sicher, dass der Bereich der Führungsaufnahme, in dem der Magnetanker axial verschiebbar gelagert ist, gegenüber dem Bereich der Führungsaufnahme, in dem der Permanentmagnet ortsfest angeordnet ist, abgedichtet ist und somit das fluide Medium, das im Betrieb zwischen den Magnetanker und der Führungsaufnahme eindringt, nicht in Kontakt mit dem Permanentmagneten kommen kann.

Das zweite Dichtteil ist zwischen der Lageraufnahme und der Führungsaufnahme angeordnet, wodurch ein Eindringen des fluiden Mediums auf der dem Magnetanker abgewandten Seite des Permanentmagneten in die Führungsaufnahme verhindert ist.

Folglich dichten das erste Dichtteil und das zweite Dichtteil den Bereich der Führungsaufnahme, in dem der Permanentmagnet ortsfest gelagert ist, vollständig ab, wobei das erste Dichtteil den Bereich hinsichtlich der dem Magnetanker zugewandten Seite und das zweite Dichtteil den Bereich hinsichtlich der dem Magnetanker abgewandten Seite abdichten. Dadurch ist eine Korrosion des Permanentmagneten und/oder der Beschichtung des Permanentmagneten durch das fluide Medium sowie eine Kontamination des fluiden Mediums durch den Permanentmagneten oder eine Beschichtung des Permanentmagneten verhindert.

Typischerweise ist das erste Dichtteil in die Führungsaufnahme eingesteckt ist. Dadurch ist eine besonders einfache und kostengünstige Montage des ersten Dichtteils sichergestellt. Auch kann das erste Dichtteil bei einer Beschädigung, zur Anpassung an den Anwendungsbereich des Ventils oder zur Anpassung der Schalteigenschaften des Ventils, beispielsweise der stromlos stabilen Schaltstellung, einfach und kostengünstig ausgetauscht werden.

Das erfindungsgemäße Ventil kann als ein monostabiles stromlos geschlossenes Ventil ausgebildet sein, sodass der Verschlusskörper bei stromloser Spule in die erste Schaltstellung übergeht und der erste Anschluss somit verschlossen ist. Das erfindungsgemäße Ventil kann auch dergestalt sein, dass der Verschlusskörper bei stromloser Spule in die zweite Schaltstellung übergeht, und somit als ein monostabiles stromlos geöffnetes Ventil ausgebildet sein. Es ist aber auch durchaus denkbar, dass das erfindungsgemäße Ventil als ein bistabiles Ventil ausgebildet ist.

Das erfindungsgemäße Ventil kann dahingehend gestaltet sein, dass der Permanentmagnet mit dem Magnetanker derart zusammenwirkt, dass der Magnetanker in der ersten Schaltstellung und somit in der Schaltstellung, in der der Verschlusskörper den ersten Anschluss dichtend verschließt, gehalten wird. Es ist aber auch durchaus denkbar, das Ventil derart zu gestalten, dass der Magnetanker in der zweiten Schaltstellung des Verschlusskörpers und somit in einer Schaltstellung, in der der erste Anschluss freigegeben ist, vom Permanentmagneten gehalten wird.

Das Zusammenwirken von Verschlusskörper und Magnetanker kann beispielsweise dadurch erfolgen, dass sich der Verschlusskörper am Magnetanker abstützt oder der Verschlusskörper und der Magnetanker miteinander verbunden sind.

Als besonders vorteilhaft wird es angesehen, wenn das zweite Dichtteil an einem dem Verschlusskörper benachbarten Abschnitt der Führungsaufnahme angeordnet ist. Dadurch ist sichergestellt, dass der Bereich zwischen Führungsaufnahme und Lageraufnahme, der nicht abgedichtet ist und in den somit das fluide Medium eindringen kann, möglichst klein ist. Dabei ist es zweckmäßig, wenn das zweite Dichtteil derart zwischen Lageraufnahme und Führungsaufnahme angeordnet ist, dass die Spule abgedichtet zwischen Führungsaufnahme und Lageraufnahme gelagert ist.

Vorzugsweise weist die Führungsaufnahme auf der dem Verschlusskörper zugewandten Seite eine Stirnwand auf, wobei der Magnetanker die Stirnwand durchsetzt. Zweckmäßig ist es, wenn das zweite Dichtteil an der dem Verschlusskörper zugewandten Seite der Stirnwand der Führungsaufnahme angeordnet ist, beispielsweise zwischen der Stirnwand der Führungsaufnahme und einer dem Verschlusskörper zugewandten und vom Magnetanker durchsetzten Stirnwand der Lageraufnahme, und der Magnetanker das zweite Dichtteil durchsetzt. Dadurch ist eine einfache und zügige Steckmontage möglich. Beispielsweise werden zunächst der Magnetanker in die Lageraufnahme, anschließend das Dichtteil in die Lageraufnahme und im Anschluss daran die Führungsaufnahme mit der Spule in die Lageraufnahme eingesteckt.

Es ist durchaus denkbar, dass das erste und/oder das zweite Dichtteil mehrteilig gestaltet sind, beispielsweise jeweils einen Grundkörper und einen Dichtring aufweisen. Vorzugsweise weisen das erste und/oder das zweite Dichtteil einen rotationssymmetrischen Grundkörper und eine in diesen eingebrachte umlaufende Nut sowie einen von der Nut aufgenommenen Dichtring auf.

In einer vorteilhaften Weiterentwicklung der Erfindung ist vorgesehen, dass das zweite Dichtteil einen ringartigen Grundkörper und einen Dichtring aufweist, wobei der Dichtring zwischen dem Grundkörper und der Führungsaufnahme, vorzugsweise in einer in den Grundkörper eingebrachten Nut, angeordnet ist. Bei einer derartigen Ausführungsform des zweiten Dichtteils ist zum einen eine gute Führung des verschiebbar gelagerten Magnetankers durch die Führungsaufnahme und den ringartigen Grundkörper des zweiten Dichtteils und zum anderen die Montage des zweiten Dichtteils erleichtert. So wird die Lage des zweiten Dichtteils senkrecht zur Verschieberichtung des Magentankers durch den Magnetanker festgelegt, indem dieser in die Durchgangsöffnung des zweiten Dichtteils eingesteckt wird. Ein derart gestaltetes Dichtteil ist besonders einfach und kostengünstig herstellbar. Ein ringartiger, vorzugsweise rotationssymmetrischer Grundkörper sowie die in diesen eingebrachte umlaufende Nut kann beispielsweise mittels eines Drehverfahrens hergestellt werden. Die Gestaltung des zweiten Dichtteils mit einem ringartigen Grundkörper und einem Dichtring erlaubt es weiterhin, handelsübliche Dichtringe zu verwenden. Dadurch ist das Ventil an den Anwendungsbereich des Ventils, insbesondere an die Eigenschaften des fluiden Mediums, in einfacher Art und Weise anpassbar. So kann je nach Art und Beschaffenheit des fluiden Mediums, wie beispielsweise Temperatur, Druck und chemische Zusammensetzung, ein Dichtring aus einem Material verwendet werden, das eine optimale Dichtwirkung und Beständigkeit des Dichtrings und somit eine Langzeitstabilität des Ventils gewährleistet.

Auch bei dieser Ausführungsform ist eine einfache und zügige Steckmontage möglich. Beispielsweise werden zunächst der Magnetanker in das zweite Dichtteil, anschließend der Magnetanker in die Führungsaufnahme, und dann die Führungsaufnahme in die Lageraufnahme eingesteckt.

Der Grundkörper des zweiten Dichtteils besteht dabei vorzugsweise aus Metall, insbesondere aus einem Metall mit magnetisierbarem Material.

Vorzugsweise weist der Grundkörper des zweiten Dichtteils auf der dem Verschlusskörper zugewandten Seite eine Ausnehmung zur Lagerung eines Rückstellmittels, insbesondere einer den Magnetanker umschließenden Feder, auf. Das Rückstellmittel wirkt vorzugsweise unmittelbar mit dem Magnetanker zusammen. Beispielsweise erfolgt eine Verschiebung des Magnetankers in Richtung des Permanentmagneten entgegen der Rückstellkraft des Rückstellmittels. Bei Verwendung einer mechanischen Feder, vorzugsweise einer Kegelfeder, als Rückstellmittel kann durch eine Variation der Tiefe der Ausnehmung die Rückstellkraft der Feder an die Anforderungen des Ventils, beispielsweise die stabile Schaltstellung, angepasst werden. So kann durch eine Anpassung der Tiefe der Ausnehmung oder ein Austausch des Grundkörpers gegen einen Grundkörper mit einer Ausnehmung entsprechender Tiefe bei Beibehaltung oder nur geringer Abänderung der übrigen Bauteile des Ventils in einfacher Art und Weise ein monostabiles, stromlos geöffnetes, ein monostabiles, stromlos geschlossenes, sowie ein bistabiles Ventil verwirklicht werden.

In einer Weiterentwicklung der Erfindung ist der Grundkörper klemmend in der Lageraufnahme gelagert. Dadurch ist eine stabile Verbindung zwischen Lageraufnahme und zweitem Dichtteil sichergestellt. Beispielsweise weist der Grundkörper einen Vorsprung oder mehrere Vorsprünge auf, die in eine korrespondierende Ausnehmung oder korrespondierende Ausnehmungen der Lageraufnahme eingreifen.

Vorzugsweise weist das Ventil ein Gehäuse auf, wobei das Gehäuse, die Lageraufnahme und die Führungsaufnahme separate Bauteile bilden. Dabei sind beispielsweise die Anschlüsse und der Ventilraum in das Gehäuse eingebracht, wobei es durchaus denkbar ist, das in dem Gehäuse ein Gegensitz zur Bildung des Ventilraums angeordnet ist.

In einer vorteilhaften Weiterentwicklung der Erfindung ist vorgesehen, dass die Lageraufnahme und/oder das Dichtteil in das Gehäuse und/oder die Führungsaufnahme in die Lageraufnahme eingesteckt sind. Dadurch ist eine einfache und zügige Montage der genannten Bauteile gewährleistet. Insbesondere können einzelnen Bauteile, beispielsweise bei einer Beschädigung, zur Anpassung an den Anwendungsbereich des Ventils oder zur Anpassung der Schalteigenschaften des Ventils, einfach und kostengünstig ausgetauscht werden.

Es wird als besonders vorteilhaft angesehen, wenn zwischen dem Gehäuse und der Lageraufnahme und/oder dem Grundkörper des zweiten Dichtteils ein Dichtmittel, vorzugsweise ein Dichtring, angeordnet ist. Dadurch wird der an den Magnetanker angrenzende Bereich gegenüber dem Gehäuse, insbesondere der Bereich zwischen dem Gehäuse und der Lageraufnahme, abgedichtet, wodurch ein Eindringen des fluiden Mediums verhindert ist. Der Dichtring kann durchaus zwischen dem Gehäuse, dem Gegensitz und der Lageraufnahme und/oder dem Grundkörper des zweiten Dichtteils angeordnet sein.

Zweckmäßig ist es, wenn der Magnetanker radial außen einen Vorsprung aufweist, der in der vom Permanentmagneten gehaltenen Schaltstellung das zweite Dichtteil und/oder die Lageraufnahme kontaktiert. Die Kontaktierung der Lageraufnahme erfolgt beispielsweise an der auf der dem Verschlusskörper zugewandten Seite ausgebildeten Stirnwand der Lageraufnahme. Durch die Kontaktierung des zweiten Dichtteils und/oder der Lageraufnahme wird zum einen die Kraftwirkung zwischen Permanentmagnet und Magnetanker verstärkt und zum anderen die Verschiebbarkeit des Magnetankers in Richtung des Permanentmagneten begrenzt.

Hinsichtlich einer Erhöhung der Kraftwirkung wird es als besonders vorteilhaft angesehen, wenn in der vom Permanentmagneten gehaltenen Schaltstellung der Vorsprung des Magnetankers das zweite Dichtteil und/oder die Lageraufnahme und zudem der Magnetanker das erste Dichtteil kontaktiert. Dadurch wird der magnetische Kreis verkürzt und somit die Kraftwirkung erhöht. Dadurch ist die Haltemoment-Stärke erhöht und das Ventil somit erschütterungsfester.

Es wird als vorteilhaft angesehen, wenn der Verschlusskörper bei einer Bewegung zum Öffnen des ersten Anschlusses entgegen der Rückstellkraft eines Rückstellmittels und/oder bei einer Bewegung zum Schließen des ersten Anschlusses entgegen der Rückstellkraft eines anderen Rückstellmittels verschiebbar ist. Insbesondere ist dabei vorgesehen, dass der Magnetanker in der vom Permanentmagnet gehaltenen Schaltstellung, vorzugsweise der zweiten Schaltstellung des Verschlussteils, entgegen der Rückstellkraft des einen Rückstellmittels gehalten wird.

Vorzugsweise sind das eine und/oder das andere Rückstellmittel als Feder, insbesondere als mechanische Feder, vorzugsweise als Schraubenfeder oder Kegelfeder, ausgebildet.

Durch eine Anpassung der Haltekraft zwischen Permanentmagneten und Magnetkern in der vom Permanentmagneten gehaltenen Schaltstellung, beispielsweise durch eine Änderung des Abstands zwischen Permanentmagnet und Magnetkern in der vom Permanentmagnet gehaltenen Schaltstellung, und/oder durch eine Änderung der Rückstellkraft des einen und/oder des anderen Rückstellmittels ist die Schaltstellung des Ventils bei stromloser Spule anpassbar.

In einer vorteilhaften Weiterentwicklung der Erfindung ist vorgesehen, dass das Ventil einen dritten Anschluss aufweist, wobei der Anschluss mit dem Ventilraum verbunden ist, der Verschlusskörper in der zweiten Schaltstellung den dritten Anschluss dichtend verschließt und den dritten Anschluss in der ersten Schaltstellung freigibt. Eine derartige Ausführungsform des erfindungsgemäßen Ventils stellt ein 3-Wege 2-Stellungen Ventil dar. Ein solches Ventil wird typischerweise auch als 3/2-Wege-Ventil bezeichnet. In der ersten Schaltstellung ist der zweite Anschluss mit dem dritten Anschluss über den Ventilraum verbunden, wobei der erste Anschluss durch den Verschlusskörper verschlossen ist. In der zweiten Schaltstellung verschließt der Ver-schlusskörper den dritten Anschluss und der erste Anschluss ist mit dem zweiten Anschluss über den Ventilraum verbunden. Somit kann in der ersten Schaltstellung das fluide Medium vom zweiten Anschluss zum dritten Anschluss oder umgekehrt fließen. Entsprechend kann in der zweiten Schaltstellung das fluide Medium vom ersten Anschluss zum zweiten Anschluss oder umgekehrt fließen.

Beispielsweise ist mit dem zweiten Anschluss ein Verbraucher verbunden, wobei der erste Anschluss als Eingang für ein fluides Medium, beispielsweise Luft, und der dritte Anschluss als Entlüftung dient. In der zweiten Schaltstellung kann somit Luft vom Eingang dem Verbraucher zugeführt werden. In der ersten Schaltstellung ist der Verbraucher über den zweiten Anschluss mit dem dritten Anschluss verbunden, wodurch eine Entlüftung stattfinden kann.

Vorzugsweise wirken der Magnetanker und der Permanentmagnet derart zusammen, dass bei stromloser Spule der Verschlusskörper in die vom Permanentmagneten gehaltenen Schaltstellung überführt und/oder in der vom Permanentmagneten gehaltenen Schaltstellung gehalten wird.

In einer vorteilhaften Weiterentwicklung der Erfindung ist vorgesehen, dass der Magnetanker und der Permanentmagnet derart zusammenwirken, dass bei stromloser Spule der Verschlusskörper in der jeweiligen Schaltstellung gehalten wird. In einer derartigen Ausführungsform wirken der Magnetanker und der Permanentmagnet sowie ggf. vorhandene Rückstellmittel derart zusammen, dass bei Abbruch des Stromflusses durch die Spule die Schaltstellung des Verschlusskörpers beibehalten wird, die vor Abbruch des Stromflusses durch die Spule vom Verschlusskörper eingenommen wurde. Bei einer derartigen Ausführungsform der Erfindung ist sichergestellt, dass kein Stromfluss durch die Spule zwecks Halten der Schaltstellung benötigt wird, was sich vorteilhaft auf den Strombedarf und die damit einhergehende Erhitzung des Ventils, insbesondere der Spule, auswirkt. Des Weiteren ist in einer derartigen Ausführungsform sichergestellt, dass bei einem Stromausfall die gegenwärtig vorliegende Schaltstellung des Verschlusskörpers beibehalten wird.

In einer vorteilhaften Weiterbildung der Erfindung ist vorgesehen, dass das Ventil eine elektronische Steuereinrichtung, vorzugsweise eine als elektronische Karte ausgebildete Steuereinrichtung, zur Regelung eines die Spule durchfließenden Stroms, insbesondere eines Umschaltstroms zur Veränderung der Schaltstellung des Ventils und/oder eines Haltestroms zum Halten einer der beiden Schaltstellungen des Ventils, aufweist. Dabei ist insbesondere vorgesehen, dass die Steuereinrichtung die Stromstärke zwecks Halten einer der beiden Schaltstellungen derart anpasst, dass die magnetische Anziehungskraft zwischen Permanentmagnet und Magnetanker konstant ist. Vorzugsweise gleicht die Steuereinrichtung unter anderem Variationen des Widerstands der Spule, beispielsweise aufgrund von Temperaturänderung, aus, sodass eine konstante Stromstärke und somit eine konstante magnetische Anziehungskraft zwischen Permanentmagnet und Magnetanker sichergestellt ist. Insbesondere ist vorgesehen, dass die Steuereinrichtung in den stromlos stabilen Schaltstellungen des Ventils einen Haltestrom von 0 Ampere sicherstellt.

Insbesondere ist vorgesehen, dass die beispielsweise als elektronische Karte ausgebildete Steuereinrichtung sicherstellt, dass der Spulenstrom die richtige Polarität und Stromstärke zwecks Veränderung der Schaltstellung des Ventils aufweist und, nachdem das Ventil umgeschaltet hat, die Steuereinrichtung die Stromstärke reduziert, um den Energieverbrauch zu reduzieren und eine Überhitzung des Ventils, insbesondere der Spule, zu vermeiden. Die Steuereinrichtung kann derart gestaltet sein, dass ein für die Spule vorzugsweise von einem Gleichstromgenerator bereitgestellter Strom derart angepasst wird, dass eine kostante Intensität der magnetischen Anziehungskraft sowohl bei Änderungen der Betriebsspannung als auch im Fall einer Änderung der Temperatur der Spule, beispielsweise durch Erwärmung und/oder Überhitzung, sicherstellt.

Vorzugsweise ist die Steuereinrichtung als elektronische Karte ausgebildet, wobei insbesondere vorgesehen ist, dass die Karte in dem Ventil integriert ist, vorzugsweise innerhalb einer die Lageraufnahme und/oder das Gehäuse zumindest teilweise abdeckenden Abdeckung angeordnet ist. In einer bevorzugten Ausführungsform ist die Karte auf einer dem Verschlusskörper abgewandten Seite der Lageraufnahme angeordnet.

In einer vorteilhaften Weiterbildung der Erfindung kontaktiert der Magnetanker in der vom Permanentmagneten gehaltenen Schaltstellung des Verschlusskörpers das erste Dichtteil. Dadurch wird eine besonders starke Haltekraft zwischen Permanentmagnet und Magnetanker in der vorgenannten Schaltstellung sichergestellt. Als besonders vorteilhaft ist es hierbei anzusehen, wenn der Permanentmagnet wiederum das erste Dichtteil kontaktiert, wodurch die Kraftwirkung zwischen Permanentmagnet und Magnetanker erhöht wird.

Vorzugsweise bestehen der Magnetanker, die Lageraufnahme, das erste Dichtteil, sowie das zweite Dichtteil, insbesondere der Grundkörper des zweiten Dichtteils, aus einem magnetisierbaren Material. Bei Verwendung von magnetisierbarem Material wird eine besonders starke magnetische Haltekraft zwischen Permanentmagnet und Magnetanker sichergestellt. Dadurch können in der erfindungsgemäßen Vorrichtung schwächere und/oder kleinere Permanentmagnete verwendet werden als bei der Verwendung von nicht-magnetisierbarem Material.

Insbesondere die Verkürzung des magnetischen Kreises und die damit einhergehenden Erhöhung der Haltemoment-Stärke ermöglicht es, dass Ventil sehr kompakt zu gestalten. Es ist durchaus denkbar, dass ein erfindungsgemäßes Ventil in Axialrichtung der Führungsaufnahme eine Ausdehnung von ≥5 mm bis <15 mm, vorzugsweise ≥5 mm bis ≤10 mm aufweist.

Weitere Merkmale der Erfindung sind in den Unteransprüchen, der Beschreibung der Figuren sowie den Figuren selbst dargestellt, wobei bemerkt wird, dass alle Einzelmerkmale und alle Kombinationen von Einzelmerkmalen erfindungswesentlich sind.

In den Figuren ist die Erfindung anhand eines Ausführungsbeispiels eines 3/2-Wege-Ventils beschrieben, ohne auf das beschriebene Ausführungsbeispiel beschränkt zu sein.

Es zeigen:
- Fig. 1: ein elektrisch schaltbares 3/2-Wege-Ventil in einer ersten Schaltstellung in einer Schnittansicht,

- Fig. 2: das elektrisch schaltbare 3/2-Wege-Ventil gemäß Fig. 1 in einer zweiten Schaltstellung in einer Schnittansicht

### Figurenbeschreibung

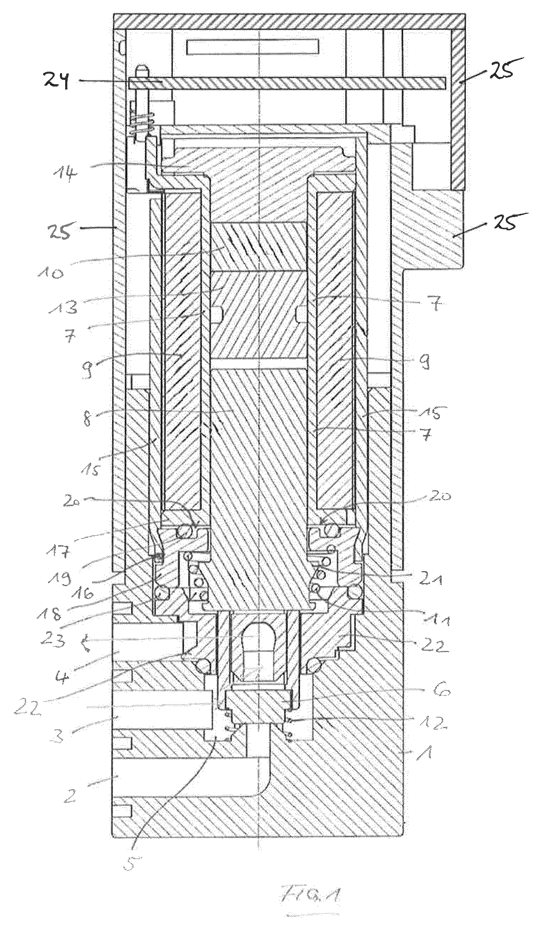

Fig. 1 zeigt ein elektrisch schaltbares, zwei Schaltstellungen aufweisendes Ventil für fluide Medien mit einem Gehäuse 1, einem ersten Anschluss 2, einem zweiten Anschluss 3 sowie einem dritten Anschluss 4. Die drei Anschlüsse 2, 3, 4 sind mit einem Ventilraum 5 verbunden, wobei in dem Ventilraum 5 ein Verschlusskörper 6 verschiebbar gelagert ist, wobei sich der Verschlusskörper 6 in einer ersten Schaltstellung befindet. In dieser ersten Schaltstellung des Verschlusskörpers 6 verschließt der Verschlusskörper 6 den ersten Anschluss 2 und gibt den dritten Anschluss 4 frei. Die Verbindung zwischen erstem Anschluss 2 und Ventilraum 5 ist in der ersten Schaltstellung abgedichtet ist und somit sowohl ein Fließen des fluiden Mediums vom zweiten Anschluss 3 zum ersten Anschluss 2 oder umgekehrt verhindert, als auch ein Fließen vom dritten Anschluss 4 zum ersten Anschluss 2 oder umgekehrt verhindert. Wie der Fig. 1 zu entnehmen ist, sind in der ersten Schaltstellung des Verschlusskörpers 6 der zweite Anschluss 3 und der dritte Anschluss 4 über den Ventilraum 5 miteinander verbunden. Somit kann das fluide Medium vom zweiten Anschluss 3 zum dritten Anschluss 4 oder umgekehrt strömen.

Bei dem ersten Anschluss 2 handelt es sich beispielsweise um einen Eingang für ein fluides Medium, beispielsweise Luft, bei dem zweiten Anschluss 3 um einen Verbindungsanschluss zu einem Verbraucher und bei dem dritten Anschluss 4 um einen Anschluss, der einer Entlüftung des Verbrauchers dient.

Das Ventil weist eine Führungsaufnahme 7 auf, wobei in dieser Führungsaufnahme 7 ein Magnetanker 8 koaxial angeordnet und in der Führungsaufnahme 7 axial verschiebbar gelagert ist. Dieser Magnetanker 8 wirkt mit dem Verschlusskörper 6 derart zusammen, dass aus einer axiale Verschiebung des Magnetankers 8 eine zur Verschiebung des Magnetankers 8 parallele Verschiebung des Verschlusskörpers 6 resultiert, wodurch der Verschlusskörper 6 bei einer Verschiebung in Richtung des Magnetankers 8 von der ersten Schaltstellung in eine zweite Schaltstellung übergeht, wobei der Verschlusskörper 6 in dieser zweiten Schaltstellung den ersten Anschluss 2 freigibt und den dritten Anschluss 4 verschließt.

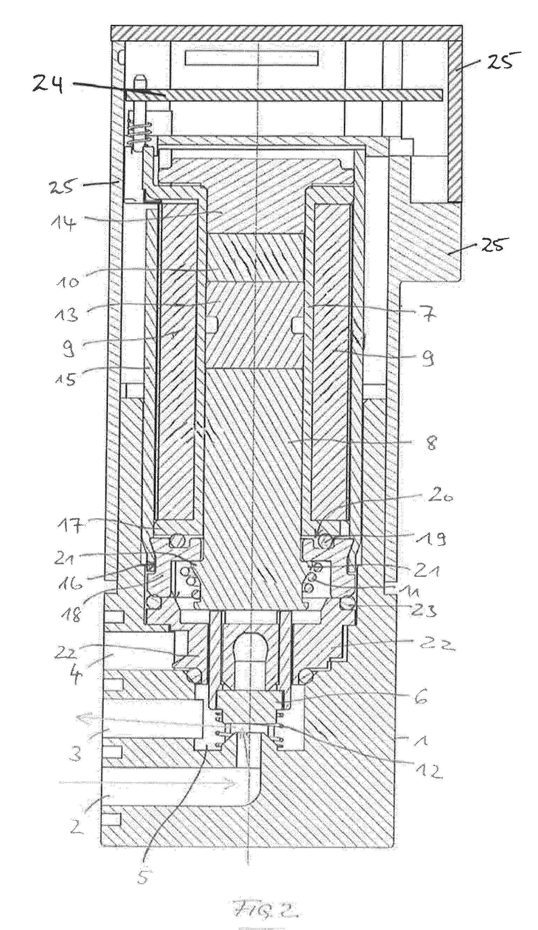

Fig. 2 zeigt das in Fig. 1 dargestellte Ventil in der zweiten Schaltstellung. Der Verschlusskörpers 6 verschließt den dritten Anschluss 4 und gibt den ersten Anschluss 2 frei. In dieser Schaltstellung ist ein Fließen des fluiden Mediums vom ersten Anschluss 2 zum dritten Anschluss 4 oder umgekehrt und ein Fließen eines fluiden Mediums vom zweiten Anschluss 3 zum dritten Anschluss 4 oder umgekehrt verhindert. In der zweiten Schaltstellung ist der ersten Anschluss 2 mit dem zweiten Anschluss 3 über den Ventilraum 5 verbunden und somit kann ein fluides Medium vom ersten Anschluss 2 zum zweiten Anschluss 3 oder umgekehrt strömen.

Die Führungsaufnahme 7 und der Magnetanker 8 werden von einer Spule 9 radial umschlossen. Bei stromdurchflossener Spule 9 wird in der Spule 9 ein elektromagnetisches Feld induziert, das mit dem Magnetanker 8 derart zusammenwirkt, dass dieser abhängig von der Polarität des Stroms entweder in Richtung des Verschlusskörpers 6 oder in Richtung eines in der Führungsaufnahme 7 angeordneten Permanentmagneten 10 verschoben und somit das Ventil geschaltet wird.

Der Magnetanker 8 und der Permanentmagnet 10 wirken dabei derart zusammen, dass der Magnetanker 8 in der in Fig. 2 dargestellten zweiten Schaltstellung vom Permanentmagneten 10 gehalten wird.

In dem dargestellten Ausführungsbeispiel sind zwei als Kegelfeder bzw. Zylinderfeder ausgebildete Rückstellmittel 11, 12 vorgesehen, wobei das eine Rückstellmittel 11 am Magnetanker 8 und das andere Rückstellmittel 12 im Ventilraum 5 am Verschlusskörper 6 angeordnet sind. Die beiden Rückstellmittel 11, 12 sind dabei derart gestaltet, dass eine Bewegung des Verschlusskörpers 6 zum Öffnen des ersten Anschlusses 2 und somit in Richtung des Permanentmagneten 10 entgegen der Rückstellkraft des einen Rückstellmittels 11 und eine Bewegung des Verschlusskörpers 6 zum Schließen des ersten Anschlusses und somit in die vom Permanentmagneten 10 abgewandte Richtung entgegen der Rückstellkraft des anderen Rückstellmittels 12 erfolgt. Folglich ist die Kraftwirkung der Rückstellmittel 11, 12 einander entgegengesetzt.

In der Führungsaufnahme 7 ist zwischen dem Permanentmagneten 10 und dem Magnetanker 8 ein erstes Dichtteil 13 angeordnet, das den Bereich der Führungsaufnahme 7, in dem der Magnetanker 8 axial verschiebbar gelagert ist, gegen den Bereich der Führungsaufnahme 7, in dem der Permanentmagnet 10 ortsfest gelagert ist, abdichtet. Somit verhindert das erste Dichtteil 13, dass das fluide Medium, welches im Betrieb zwischen den axial verschiebbar gelagerten Magnetanker 8 und die Führungsaufnahme 7 gelangt, zum Permanentmagneten 10 gelangt.

Der Permanentmagnet 10 ist zwischen dem ersten Dichtteil 13 und einem Verschlussteil 14 der Führungsaufnahme 7 angeordnet. Dabei bilden das erste Dichtteil 13 und das Verschlussteil 14 separate Bauteile. Das erste Dichtteil 13, der Permanentmagnet 10 sowie das Verschlussteil 14 sind in die Führungsaufnahme 7 eingesteckt, wobei das Verschlussteil 14 radial außen Vorsprünge aufweist, die die Führungsaufnahme 7 auf ihrer dem Verschlusskörper 6 abgewandten Seite hintergreifen.

In der in den Fig. 1 und 2 dargestellten Ausführungsform kontaktieren das Verschlussteil 14 und das erste Dichtteil 13 den Permanentmagneten 10 auf einander abgewandten Seiten des Permanentmagneten 10. Dies stellt zum einen sicher, dass der Permanentmagnet 10 von dem erste Dichtteil 13 und dem Verschlussteil 14 klemmend und ortsfest in der Führungsaufnahme 7 gehalten ist und zum anderen ist durch die Kontaktierung die magnetische Anziehungskraft zwischen Permanentmagnet 10 und Magnetanker 8 erhöht.

Die Spule 9 und die Führungsaufnahme 7 sind in einer als Rohr ausgebildeten Lageraufnahme 15 angeordnet, wobei zwischen der Lageraufnahme 15 und einem dem Verschlusskörper 6 benachbarten Abschnitt der Führungsaufnahme 7 ein zweites Dichtteil 16 angeordnet ist.

Das zweite Dichtteil 16 ist dabei zwischen einer Stirnwand 17 der Führungsaufnahme 7 und der Lageraufnahme gelagert, wobei die Stirnwand 17 auf der dem Verschlusskörper 6 zugewandten Seite der Führungsaufnahme 7 ausgebildet ist und der Magnetanker 8 die Stirnwand 17 und das zweite Dichtteil 16 durchsetzt.

Das zweite Dichtteil 16 weist einen ringartigen Grundkörper 18, der klemmend in der Lageraufnahme 15 gelagert ist, und einen Dichtring 19 auf, wobei der Dichtring 19 in einer Nut 20 des Grundkörpers 18 zwischen der Stirnwand 17 der Führungsaufnahme 7 und dem Grundkörper 18 angeordnet ist. Der Magnetanker 8 durchsetzt die Stirnwand 17 der Führungsaufnahme 7, den Grundkörper 18 und den Dichtring 19.

Das zweite Dichtteil 16 verhindert ein Eindringen des fluiden Mediums, zwischen Lageraufnahme 15 und Führungsaufnahme 7, wodurch ein Eindringen des fluiden Mediums auf der dem Magnetanker 8 abgewandten Seite des Permanentmagneten 10 in die Führungsaufnahme 7 und in den Bereich der Spule 9 verhindert ist. Somit sind die Spule 9 und der Permanentmagnet 10 durch das erste Dichtteil 13 und das zweite Dichtteil 16 gegen das fluide Medium abgedichtet und sowohl ein Korrosion des Permanentmagneten 10 und/oder eine Beschichtung des Permanentmagneten 10 und der Spule 9 als auch eine Kontamination des fluiden Mediums verhindert.

In einer dem Verschlusskörper 6 zugewandten Ausnehmung des Grundkörpers 18 des zweiten Dichtteils 16 ist das eine Rückstellmittel 11 gelagert, wobei dieses den Magnetanker 8 umschließt.

Am Magnetanker 8 sind radial außen Vorsprünge 21 ausgebildet, die das zweite Dichtteil 16 auf seiner dem Verschlusskörper 6 zugewandten Seite hintergreifen. Wie man der Fig. 2 entnehmen kann, kontaktieren die Vorsprünge 21 des Magnetankers 8 in der zweiten Schaltstellung den Grundkörper 18 des zweiten Dichtteils 16. Das zweite Dichtteil 16 dient somit als Anschlag für den Magnetanker 8 und begrenzt die Verschiebbarkeit des Magnetankers 8 in Richtung des Permanentmagneten 10.

Das erste Dichtteil 13, der Permanentmagnet 10 und das Verschlussteil 14 sind ortsfest in der Führungsaufnahme 7 angeordnet. Somit ist in der ersten Schaltstellung des Verschlusskörpers 6 der Magnetanker 8 beabstandet zum ersten Dichtteil 13 angeordnet, wohingegen in der zweiten Schaltstellung gemäß Fig. 2 der Magnetanker 8 das erste Dichtteil 13 kontaktiert. Durch die Kontaktierung von Magnetanker 8 und erstem Dichtteil 13, Magnetanker 8 und Grundkörper 18 des zweiten Dichtteils 16, Permanentmagnet 10 und erstem Dichtteil 13, Permanentmagnet 10 und Verschlussteil 14, Lageraufnahme 15 und Verschlussteil 14, sowie Lageraufnahme 15 und Grundkörper 18 liegt zwischen diesen Bauteilen 8, 10, 13, 15, 18 in der zweiten Schaltstellung ein geschlossener Pfad und somit ein magnetischer Kreis vor, der eine besonders starke Kraftwirkung zwischen Permanentmagnet 10 und Magnetanker 8 zwecks Halten des Magnetankers 8 in der zweiten Schaltstellung sicherstellt. Daher ist es zweckmäßig, wenn der Magnetanker 8, das erste Dichtteil 13, der Verschlusskörper 14, die Lageraufnahme 7 sowie der Grundkörper 18 aus einem magnetisierbaren Material bestehen.

Zwischen dem zweiten Dichtteil 16, dem Gehäuse 1 und einem Gegensitz 22 ist ein als Dichtring ausgebildetes Dichtmittel 23 gelagert, wobei das Dichtmittel 23 an der dem Verschlusskörper 6 zugewandten Seite des Grundkörpers 18 des zweiten Dichtteils 16 angeordnet ist. Dadurch wird ein Eindringen des fluiden Mediums, welches im Betrieb den Magnetanker 8 kontaktiert, in den Bereich zwischen Lageraufnahme 15 und Gehäuse 1 verhindert.

Bei der dargestellten Ausführungsform ist die Lageraufnahme 15 in das Gehäuse 1 eingesteckt, wobei die Lageraufnahme 15 radial außen an einer parallel zur Lageraufnahme 15 ausgebildeten Seitenwand des Gehäuses 1 formschlüssig anliegt.

Die Führungsaufnahme 7 mit der Spule 9 ist wiederum in die Lageraufnahme 15 eingesteckt.

Bei der in den Fig. 1 und 2 dargestellten Ausführungsform kann in einfacher Art und Weise ein monostabiles stromlos geöffnetes, ein monostabiles stromlos geschlossenes oder ein bistabiles Ventil bei annähernd gleichen Bauteilen verwirklicht werden. Zu diesem Zweck können beispielsweise die von den als Kegelfedern ausgebildeten Rückstellmitteln 11, 12 ausgeübten Rückstellkräfte durch Austausch der Kegelfedern angepasst werden. Auch ist denkbar, die Wechselwirkung zwischen Permanentmagnet 10 und Magnetanker 8 durch Variation des Abstandes von Permanentmagnet 10 und Magnetanker 8 in der vom Permanentmagneten 10 gehaltenen Schaltstellung zu verändern.

Des Weiteren kann auch bei Beibehaltung der mechanischen Federn die Rückstellkraft des einen Rückstellmittels 11, das am Magnetanker 8 und in der Ausnehmung des Grundkörpers 18 angeordnet ist, durch eine Variation der Tiefe der Ausnehmung des Grundkörpers18 angepasst werden.

Eine als elektronische Karte ausgebildete elektronische Steuereinrichtung 24 zur Regelung eines die Spule 9 durchfließenden Stroms stellt sicher, dass ein Haltestrom zum Halten einer der beiden Schaltstellungen des Ventils die Spule 9 durchfließt, sowie ein ausreichender Umschaltstrom zur Veränderung der Schaltstellung des Ventils von einem nicht dargestellten Gleichstromgenerator geliefert wird. Die Steuereinrichtung 24 ist dabei in das Ventil integriert, derart, dass diese auf einer dem Verschlusskörper 6 abgewandten Seite der Lageraufnahme 15 und innerhalb einer die Lageraufnahme 15 und das Gehäuse 1 teilweise abdeckenden Abdeckung 25 angeordnet ist. In der hier dargestellten Ausführungsform ist die Abdeckung 25 mehrteilig ausgebildet.

Zwecks Wechsel der Schaltstellung in die zweite Schaltstellung, welche in Fig. 2 dargestellt ist, liefert eine nicht dargestellte Stromquelle einen Umschaltstrom, der von der Steuereinrichtung 24 angepasst wird, sodass ein elektromagnetisches Feld in der Spule 9 induziert wird, wodurch eine Kraft auf den Magnetanker 8 einwirkt, die in Richtung des Permanentmagneten 10 gerichtet ist. Dadurch verschiebt sich der Magnetanker 8 in Richtung des Permanentmagneten 10. Die Verschiebung des Magnetankers 8 wird durch die Vorsprünge 21 des Magnetankers 8 und das zweite Dichtteil 16 begrenzt. In der zweiten Schaltstellung gibt der mit dem Magnetanker 8 zusammenwirkende Verschlusskörper 6 den ersten Anschluss 2 frei und verschließt den dritten Anschluss 4. Durch die Verringerung des Abstands zwischen Magnetanker 8 und Permanentmagnet 10 sowie dem Schließen des magnetischen Kreises wird die Kraftwirkung zwischen Permanentmagnet 10 und Magnetanker 8 erhöht, sodass der Haltestrom, der zum Halten des Magnetankers 8 in der zweiten Schaltstellung benötigt wird, geringer ist als der Umschaltstrom, der zum Wechsel von der ersten zur zweiten Schaltstellung benötigt wird.

Die dargestellte Ausführungsform zeigt lediglich eine mögliche Ausgestaltung der Erfindung, zu welcher weitere zahlreiche Varianten denkbar und im Rahmen der Erfindung sind. Das exemplarisch gezeigte Ausführungsbeispiel ist in keiner Weise hinsichtlich des Umfangs, der Anwendbarkeit oder der Konfigurationsmöglichkeiten der Erfindung als einschränkend auszulegen. Die vorliegende Beschreibung zeigt dem Fachmann lediglich eine mögliche Implementierung eines erfindungsgemäßen Ausführungsbeispiels auf. So können an der Funktion und Anordnung von beschriebenen Elementen vielfältigste Modifikationen vorgenommen werden, ohne hierbei den durch die nachfolgenden Patentansprüche definierten Schutzbereich oder dessen Äquivalente zu verlassen.

### Bezugszeichenliste

- 1: Gehäuse
- 2: Erster Anschluss
- 3: Zweiter Anschluss
- 4: Dritter Anschluss
- 5: Ventilraum
- 6: Verschlusskörper
- 7: Führungsaufnahme
- 8: Magnetanker
- 9: Spule
- 10: Permanentmagnet
- 11: Rückstellmittel
- 12: Anderes Rückstellmittel
- 13: Erstes Dichtteil
- 14: Verschlussteil
- 15: Lageraufnahme
- 16: Zweites Dichtteil
- 17: Stirnwand
- 18: Grundkörper
- 19: Dichtring
- 20: Nut
- 21: Vorsprung
- 22: Gegensitz
- 23: Dichtmittel
- 24: Steuereinrichtung
- 25: Abdeckung

## Patentansprüche

1. Elektrisch schaltbares Ventil für fluide Medien aufweisend einen ersten Anschluss (2) sowie einen zweiten Anschluss (3), wobei die Anschlüsse (2, 3) mit einem Ventilraum (5) verbunden sind, einen im Ventilraum (5) verschiebbar gelagerten Verschlusskörper (6), wobei der Verschlusskörper (6) in einer ersten Schaltstellung den ersten Anschluss (2) dichtend verschließt und in einer zweiten Schaltstellung den ersten Anschluss (2) freigibt, einen in einer Führungsaufnahme (7) axial verschiebbar gelagerten, im Betrieb dem fluiden Medium ausgesetzten Magnetanker (8), wobei der Magnetanker (8) mit dem Verschlusskörper (6) zusammenwirkt, einen in der Führungsaufnahme (7) ortsfest angeordneten Permanentmagneten (10), wobei der Magnetanker (8) mit dem Permanentmagneten (10) derart zusammenwirkt, dass der Magnetanker (8) in einer der Schaltstellungen des Verschlusskörpers (6) vom Permanentmagneten (10) gehalten wird, eine Lageraufnahme (15), die die Führungsaufnahme (7) und eine den Magnetanker (8) und die Führungsaufnahme (7) radial umschließende Spule (9) aufnimmt, wobei die Lageraufnahme (15) auf einer dem Verschlusskörper (6) zugewandten Seite eine Durchgangsöffnung aufweist und der Magnetanker (8) die Durchgangsöffnung durchsetzt, sowie ein erstes Dichtteil (13), das innerhalb der Führungsaufnahme (7) zwischen dem Permanentmagneten (10) und dem Magnetanker (8) angeordnet ist, **dadurch gekennzeichnet, dass** ein zweites Dichtteil (16) zwischen der Lageraufnahme (15) und der Führungsaufnahme (7) angeordnet ist.

2. Ventil nach Anspruch 1, **dadurch gekennzeichnet, dass** das zweite Dichtteil (16) an einem dem Verschlusskörper (6) benachbarten Abschnitt der Führungsaufnahme (7) angeordnet ist.

3. Ventil nach Anspruch 1 oder 2, **dadurch gekennzeichnet, dass** die Führungsaufnahme (7) auf der dem Verschlusskörper (6) zugewandten Seite eine Stirnwand (17) aufweist, das zweite Dichtteil (16) an der dem Verschlusskörper (6) zugewandten Seite der Stirnwand (17) angeordnet ist und der Magnetanker (8) die Stirnwand (17) und das zweite Dichtteil (16) durchsetzt.

4. Ventil nach einem der Ansprüche 1 bis 3, **dadurch gekennzeichnet, dass** das zweite Dichtteil (16) einen ringartigen Grundkörper (18) und einen Dichtring (19) aufweist, wobei der Dichtring (19) zwischen dem Grundkörper (18) und der Führungsaufnahme (7), vorzugsweise in einer in den Grundkörper (18) eingebrachten Nut (20), angeordnet ist.

5. Ventil nach Anspruch 4, **dadurch gekennzeichnet, dass** der Grundkörper (18) auf der dem Verschlusskörper (6) zugewandten Seite eine Ausnehmung zur Lagerung eines Rückstellmittels (11), insbesondere einer den Magnetanker (8) umschließenden Feder, aufweist.

6. Ventil nach Anspruch 4 oder 5, **dadurch gekennzeichnet, dass** der Grundkörper (18) klemmend in der Lageraufnahme (15) gelagert ist.

7. Ventil nach einem der Ansprüche 1 bis 6, **dadurch gekennzeichnet, dass** das Ventil ein Gehäuse (1) aufweist, wobei das Gehäuse (1), die Lageraufnahme (15) und die Führungsaufnahme (7) separate Bauteile bilden.

8. Ventil nach Anspruch 7, **dadurch gekennzeichnet, dass** zwischen dem Gehäuse (1) und der Lageraufnahme (15) und/oder dem Grundkörper (18) ein Dichtmittel (23), vorzugsweise ein Dichtring, angeordnet ist.

9. Ventil nach einem der Ansprüche 1 bis 8, **dadurch gekennzeichnet, dass** die Lageraufnahme (15) und/oder das zweite Dichtteil (16) in das Gehäuse (1) und/oder die Führungsaufnahme (7) in die Lageraufnahme (15) eingesteckt sind.

10. Ventil nach einem der Ansprüche 1 bis 9, **dadurch gekennzeichnet, dass** der Magnetanker (8) radial außen einen Vorsprung (21) aufweist, wobei bei Kontaktierung von dem Magnetanker (8) und dem ersten Dichtteil (13) in der vom Permanentmagneten (10) gehaltenen Schaltstellung der Vorsprung (21) das zweite Dichtteil (16) und/oder die Lageraufnahme (15) kontaktiert.

11. Ventil nach einem der Ansprüche 1 bis 10, **dadurch gekennzeichnet, dass** der Verschlusskörper (6) bei einer Bewegung zum Öffnen des ersten Anschlusses (2) entgegen der Rückstellkraft eines Rückstellmittels (11) und/oder bei einer Bewegung zum Schließen des ersten Anschlusses (2) entgegen der Rückstellkraft eines anderen Rückstellmittels (12) verschiebbar ist.

12. Ventil nach einem der Ansprüche 1 bis 11, **dadurch gekennzeichnet, dass** das Ventil einen dritten Anschluss (4) aufweist, wobei der Anschluss (4) mit dem Ventilraum (5) verbunden ist, der Verschlusskörper (6) in der zweiten Schaltstellung den dritten Anschluss (4) dichtend verschließt und in der ersten Schaltstellung den dritten Anschluss (4) freigibt.

13. Ventil nach einem der Ansprüche 1 bis 12, **dadurch gekennzeichnet, dass** der Magnetanker (8) und der Permanentmagnet (10) derart zusammenwirken, dass bei stromloser Spule (9) der Verschlusskörper (6) in die vom Permanentmagneten (10) gehaltenen Schaltstellung überführt und/oder in der vom Permanentmagneten (10) gehaltenen Schaltstellung gehalten wird.

14. Ventil nach einem der Ansprüche 1 bis 12, **dadurch gekennzeichnet, dass** der Magnetanker (8) und der Permanentmagnet (10) derart zusammenwirken, dass bei stromloser Spule (9) der Verschlusskörper (6) in der jeweiligen Schaltstellung gehalten wird.

15. Ventil nach einem der Ansprüche 1 bis 14, **dadurch gekennzeichnet, dass** das Ventil eine elektronische Steuereinrichtung (24) zur Regelung eines die Spule (9) durchfließenden Stroms, insbesondere eines Umschaltstroms zur Veränderung der Schaltstellung des Ventils und/oder eines Haltestroms zum Halten einer der beiden Schaltstellungen des Ventils, aufweist.

## Geänderte Patentansprüche

### Geänderte Patentansprüche gemäss Regel 137(2) EPÜ.

1. Elektrisch schaltbares Ventil für fluide Medien aufweisend einen ersten Anschluss (2) sowie einen zweiten Anschluss (3), wobei die Anschlüsse (2, 3) mit einem Ventilraum (5) verbunden sind, einen im Ventilraum (5) verschiebbar gelagerten Verschlusskörper (6), wobei der Verschlusskörper (6) in einer ersten Schaltstellung den ersten Anschluss (2) dichtend verschließt und in einer zweiten Schaltstellung den ersten Anschluss (2) freigibt, einen in einer Führungsaufnahme (7) axial verschiebbar gelagerten, im Betrieb dem fluiden Medium ausgesetzten Magnetanker (8), wobei der Magnetanker (8) mit dem Verschlusskörper (6) zusammenwirkt, einen in der Führungsaufnahme (7) ortsfest angeordneten Permanentmagneten (10), wobei der Magnetanker (8) mit dem Permanentmagneten (10) derart zusammenwirkt, dass der Magnetanker (8) in einer der Schaltstellungen des Verschlusskörpers (6) vom Permanentmagneten (10) gehalten wird, eine Lageraufnahme (15), die die Führungsaufnahme (7) und eine den Magnetanker (8) und die Führungsaufnahme (7) radial umschließende Spule (9) aufnimmt, wobei die Lageraufnahme (15) auf einer dem Verschlusskörper (6) zugewandten Seite eine Durchgangsöffnung aufweist und der Magnetanker (8) die Durchgangsöffnung durchsetzt, sowie ein erstes Dichtteil (13), das innerhalb der Führungsaufnahme (7) zwischen dem Permanentmagneten (10) und dem Magnetanker (8) angeordnet ist, und ein zweites Dichtteil (16), das zwischen der Lageraufnahme (15) und der Führungsaufnahme (7) angeordnet ist, **dadurch gekennzeichnet, dass** das zweite Dichtteil (16) einen ringartigen Grundkörper (18) und einen Dichtring (19) aufweist, wobei der Dichtring (19) zwischen dem Grundkörper (18) und der Führungsaufnahme (7) angeordnet ist und der Grundkörper (18) auf der dem Verschlusskörper (6) zugewandten Seite eine Ausnehmung zur Lagerung eines Rückstellmittels (11) aufweist.

2. Ventil nach Anspruch 1, **dadurch gekennzeichnet, dass** das zweite Dichtteil (16) an einem dem Verschlusskörper (6) benachbarten Abschnitt der Führungsaufnahme (7) angeordnet ist.

3. Ventil nach Anspruch 1 oder 2, **dadurch gekennzeichnet, dass** die Führungsaufnahme (7) auf der dem Verschlusskörper (6) zugewandten Seite eine Stirnwand (17) aufweist, das zweite Dichtteil (16) an der dem Verschlusskörper (6) zugewandten Seite der Stirnwand (17) angeordnet ist und der Magnetanker (8) die Stirnwand (17) und das zweite Dichtteil (16) durchsetzt.

4. Ventil nach einem der Ansprüche 1 bis 3, **dadurch gekennzeichnet, dass** der Dichtring (19) in einer in den Grundkörper (18) eingebrachten Nut (20) angeordnet ist.

5. Ventil nach einem der Ansprüche 1 bis 4, **dadurch gekennzeichnet, dass** das Rückstellmittel (11) als eine den Magnetanker (8) umschließende Feder ausgebildet ist.

6. Ventil nach einem der Ansprüche 1 bis 5, **dadurch gekennzeichnet, dass** der Grundkörper (18) klemmend in der Lageraufnahme (15) gelagert ist.

7. Ventil nach einem der Ansprüche 1 bis 6, **dadurch gekennzeichnet, dass** das Ventil ein Gehäuse (1) aufweist, wobei das Gehäuse (1), die Lageraufnahme (15) und die Führungsaufnahme (7) separate Bauteile bilden.

8. Ventil nach Anspruch 7, **dadurch gekennzeichnet, dass** zwischen dem Gehäuse (1) und der Lageraufnahme (15) und/oder dem Grundkörper (18) ein Dichtmittel (23), vorzugsweise ein Dichtring, angeordnet ist.

9. Ventil nach einem der Ansprüche 1 bis 8, **dadurch gekennzeichnet, dass** die Lageraufnahme (15) und/oder das zweite Dichtteil (16) in das Gehäuse (1) und/oder die Führungsaufnahme (7) in die Lageraufnahme (15) eingesteckt sind.

10. Ventil nach einem der Ansprüche 1 bis 9, **dadurch gekennzeichnet, dass** der Magnetanker (8) radial außen einen Vorsprung (21) aufweist, wobei bei Kontaktierung von dem Magnetanker (8) und dem ersten Dichtteil (13) in der vom Permanentmagneten (10) gehaltenen Schaltstellung der Vorsprung (21) das zweite Dichtteil (16) und/oder die Lageraufnahme (15) kontaktiert.

11. Ventil nach einem der Ansprüche 1 bis 10, **dadurch gekennzeichnet, dass** der Verschlusskörper (6) bei einer Bewegung zum Öffnen des ersten Anschlusses (2) entgegen der Rückstellkraft eines Rückstellmittels (11) und/oder bei einer Bewegung zum Schließen des ersten Anschlusses (2) entgegen der Rückstellkraft eines anderen Rückstellmittels (12) verschiebbar ist.

12. Ventil nach einem der Ansprüche 1 bis 11, **dadurch gekennzeichnet, dass** das Ventil einen dritten Anschluss (4) aufweist, wobei der Anschluss (4) mit dem Ventilraum (5) verbunden ist, der Verschlusskörper (6) in der zweiten Schaltstellung den dritten Anschluss (4) dichtend verschließt und in der ersten Schaltstellung den dritten Anschluss (4) freigibt.

13. Ventil nach einem der Ansprüche 1 bis 12, **dadurch gekennzeichnet, dass** der Magnetanker (8) und der Permanentmagnet (10) derart zusammenwirken, dass bei stromloser Spule (9) der Verschlusskörper (6) in die vom Permanentmagneten (10) gehaltenen Schaltstellung überführt und/oder in der vom Permanentmagneten (10) gehaltenen Schaltstellung gehalten wird.

14. Ventil nach einem der Ansprüche 1 bis 12, **dadurch gekennzeichnet, dass** der Magnetanker (8) und der Permanentmagnet (10) derart zusammenwirken, dass bei stromloser Spule (9) der Verschlusskörper (6) in der jeweiligen Schaltstellung gehalten wird.

15. Ventil nach einem der Ansprüche 1 bis 14, **dadurch gekennzeichnet, dass** das Ventil eine elektronische Steuereinrichtung (24) zur Regelung eines die Spule (9) durchfließenden Stroms, insbesondere eines Umschaltstroms zur Veränderung der Schaltstellung des Ventils und/oder eines Haltestroms zum Halten einer der beiden Schaltstellungen des Ventils, aufweist.
